# EUROPEAN PATENT SPECIFICATION

(11) **EP 0 486 136 B1**
(45) Date of publication and mention of the grant of the patent: **27.12.1995**
(21) Application number: 91308259.0
(22) Date of filing: 10.09.1991
(51) Int. Cl.: H02G 3/04

(54) **Pressure resistant flexible conduit**
Flexible und druckfeste Leitungsführung
Conduit flexible resistant à la pression

(30) Priority: 26.10.1990 GB 9023395
(43) Date of publication of application: 20.05.1992
(73) Proprietor: W.L. GORE & ASSOCIATES (UK) LTD, London WC2A 2JP (GB)
(72) Inventor: Bruce, Alexander, Downfield, Dundee DD3 9RB (GB); Martin, James Duncan Shaw, Dundee DD2 2EZ (GB)
(74) Representative: Horner, Martin Grenville

(56) References cited:
- EP-A- 0 265 057
- EP-A- 0 346 023
- DE-A- 2 409 532
- FR-A- 1 128 004
- FR-A- 2 414 244
- US-A- 4 731 502

## Description

The present invention relates to a reinforced flexible conduit for containing one or more transmission lines (e.g. microwave cables, radio frequency cables, wave guides, fibre optic cables, DC lines, high/low pressure air or hydraulic hoses, and other transmission media) and for protecting the lines in a pressurised environment, particularly a hydrostatically pressured environment, where the lines are likely to be subject to repeated bending or flexing.

Flexible coaxial cables are frequently used as transmission lines for radio frequency, microwave frequency, and millimetre wavelength electromagnetic waves. These high frequency waves are capable of carrying many signals simultaneously. Physical maintenance of the signal path is critical to transmitting the signals from one point to another without distortion (return loss) or attenuation (signal loss). The flexible coaxial cables used have an inner conductor and an outer coaxial shield spaced therefrom. The inner conductor is typically stranded or solid wire and the outer conductor is typically braided metal wire. The ratio of the diameter of the inner and outer conductors and the dielectric constant of the material separating them determines the cable impedence and must be maintained within tight tolerances. Any distortions due to bending, denting, crushing or otherwise introducing a non-concentric relationship will result in higher distortion and higher attenuation.

Where the coaxial cable is to be permanently installed in a static orientation, any variations in impedence of the cable can be compensated for during the initial set up of the electronics installation. However, special problems arise where the flexible coaxial cable is to be subject to routine flexing under its operational conditions, and these problems are exacerbated if the cable is to be used under conditions of substantial hydrostatic pressure.

Such requirements for a coaxial cable capable of withstanding repeated flexing under conditions of high hydrostatic pressure exist in modern submarines. Modern submarine mast design dictates the placement of electronic equipment in an electronics pod at the mast head connected by microwave transmission lines to processing equipment in the hull. This arrangement creates the requirement for a microwave transmission line capable of withstanding a hydrostatic pressure in excess of 500 psi (3.4 x 10⁶ Nm⁻²). Simultaneously, such coaxial cables may be subject to repeated bending over fairly tight radii as the masthead is raised and lowered during operation of the submarine. It is nevertheless desirable that under such conditions the impedence of the coaxial cables remain substantially constant, so that errors are not introduced into the transmitted signals.

The use of a more rigid dielectric material to overcome the problem of compression under hydrostatic pressure has an adverse effect on cable performance and the cable has a restricted lifetime when repeatedly flexed. Furthermore, this technique limits the types of cables which can be used, their number and their application and consequently has a detrimental effect on the design and the performance of the system as a whole.

Another approach to the minimisation of undesired compression of the dielectric material is to reinforce the cable. Reinforced cables used hitherto have generally comprised a covering formed of an open coil helical spring (i.e. a spring where the adjacent coils are spaced from one another) with an external sleeve of elastomeric material around the spring. However, this construction suffers from certain disadvantages. Firstly, when subjected to externally-applied pressure, the jacket tends to become forced between the spaced coils of the spring, so that hydrostatic pressure is transmitted to some degree to the interior of the cable. Secondly, the round cross-section of the wire used for the spring provides a good "lead-in" for the jacket material as it is forced between the coils of the spring under pressure. Thirdly, the application of external pressure to this present arrangement tends to result in a longitudinal force component which may cause the cable to change length, either by becoming shorter or longer depending on the particular construction employed.

French patent No. 1,128,004 discloses a thick reinforcing sheath formed by winding in helices on a cable, one or more profiled strips of flexible insulating material, such as natural or synthetic rubber. The winding may additionally be reinforced by wire, metal strips or synthetic textile tapes. The wires or metal strips being formed within the profiled strips.

U.S. patent 4731502 discloses a cable protected by means of a helically-wound armour sheath having hard wire located in the groove of the sheath between adjacent turns, whose object is to restrict the permitted bend radius to a minimum value so as to minimise the effects of flexing on the microwave cable. However, such external conduit or ruggedisation adds significantly to the weight, diameter and cost of the cable, and the cable would suffer from the above mentioned disadvantages when an external pressure is applied.

It is an object of the present invention to mitigate these disadvantages and to provide a flexible conduit of the reinforced spring type, which can successfully isolate transmission lines contained therein from externally applied pressures, whilst at the same time allowing a high degree of flexibility.

Generally speaking, the present invention involves using a closed spring where adjacent turns normally abut one another, and formed of a filament having a flattened outer configuration.

Specifically, the present invention provides a reinforced flexible conduit for containing a transmission line which comprises;
- a multi-start closed helical coil spring of at least two helical filaments comprised of a plurality of adjacent turns abutting one another, and the filament having a cross-sectional configuration such that the abutting turns fit closely together at the outer curved surface of the coil spring; and
- an outer sleeve disposed around the helical coil spring.

The configuration as just defined refers to the normal non-flexed disposition of the flexible conduit.

The internal dimensions of the conduit are generally somewhat larger than the transmission line(s) that it is intended to enclose, so that a transmission line with attendant end connectors may be introduced into or removed from the reinforced cable for assembly or repair purposes. Thus, the flexible conduit is non-dedicated and the number and type of transmission lines can be varied as required.

Nevertheless, the flexible conduit construction is also suitable for use as a protective ruggedisation of a dedicated cable containing a single transmission line.

In the normal non-flexed configuration of the flexible conduit, adjacent turns of the helical coil spring abut one another at least at the outer curved surface of the coil spring so as to provide a surface which is substantially continuous in a longitudinal direction. The cross-section of the flexible conduit itself may be circular or other curved configuration, such as oval. The essentially continuous outer curved surface of the helical coil helps prevent extrusion of the jacket into the spaces between adjacent turns. Even when the helical coil spring is flexed, so that spaces open up between adjacent turns on the outer side of the bend, the cross-sectional configuration of the filament minimises lead in and extrusion of the outer sleeve between the turns of the coil. Preferably, the abutting surfaces of adjacent turns are of complementary cross-section. The filament cross section may be square, trapezoidal, semi-circular (with the flat diameter facing outwards). It is particularly preferred that the filament have a stepped cross-section, adjacent steps overlying one another so that even in the flexed position, the extent to which the jacket may become extruded between adjacent turns of the coil spring is limited.

For wider diameters the coils of a single start spring tend to distort sideways under pressure - leading to failure. This is believed to be due to the shallow pitch of a single-start closed coil spring which allows adjacent coils to slip laterally relative to one another. Thus for wider conduits or for improved pressure resistance, it is essential to employ a multi-start helical coil spring comprised of at least two helical filaments, preferably 8-6 filaments. The coils could have differing cross-sections if desired, e.g. a four-start coil composed of round, biconcave, round and biconcave filaments respectively.

The helical coil may be formed of metal or plastics material.

In order to allow for possible movement between the coil and the outer sleeve and also to provide for improved abrasion resistance and therefore flex life, it is preferred to provide a tape wrap around the helical coil before application of the outer sleeve. The tape wrap is advantageously formed of porous or non-porous PTFE.

The outer sleeve is usually formed of an elastomeric material extruded directly over the top of the coil or over the optional tape wrap.

As well as being highly pressure-resistant, even when flexed, the reinforced conduit of the present invention also has a length which remains stable irrespective of the external hydrostatically applied pressure. The length of previous cables employing open springs tends to vary dependent upon the applied pressure, due to longitudinal forces arising from the round spring cross-section and extrusion of the jacket between the coils. The construction is simpler and more economic than that described in US patent 4731502.

Embodiments of the present invention will now be described by way of example only in conjunction with the drawings wherein;
Figure 1 is a longitudinal cross-section of part of a prior art cable construction employing an open spring;
Figure 2 is a part cross-section of a reinforced cable according to the present invention;
Figure 3 is a part cross-section of the spring of a second embodiment wherein the filament has a stepped cross-section;
Figure 4 is a part cross-section of a third embodiment wherein the spring filament is of trapezoidal cross-section; and
Figure 5 is a part cross-section of a fourth embodiment wherein the spring cross-section is double-curved; and
Figure 6 is a part cross-section of the spring of a fifth embodiment having a substantially semi-circular cross-section.
Figure 7 is a schematic elevation of a four-start spring according to a sixth embodiment.

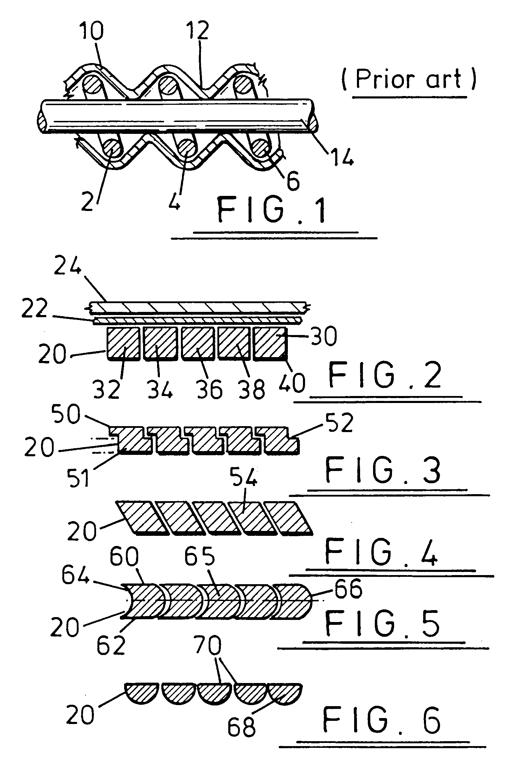

For comparison purposes, Figure 1 shows a reinforced cable construction according to the prior art and capable of withstanding a pressure of 200 to 500lbs per square inch (1.38 x 10⁶ to 3.44 x 10⁶ pascals) without substantially affecting the performance of the microwave transmission line running through it. It comprises an inner helical spring having spaced adjacent turns 2, 4, 6 and an outer jacket 10 of an elastomer extruded thereon. The cable is shown in a pressurised condition (1000 psi - 6.89 x 10⁶ pascals) to illustrate the partial extrusion of the jacket between the spaced adjacent turns of the spring, such as in the region 12, into contact with a microwave transmission line 14 passing through the cable. This has the effect of partially transmitting external pressure to the inside of the cable and onto the microwave transmission line 14 leading to possible damage, and also imposing longitudinal forces on the cable which tend to vary its length dependent on the pressure.

Figures 2 to 7 show embodiments of the flexible conduit of the present invention. All embodiments comprise a closed helical coil spring 20 having an outer wrap of PTFE tape 22 and an external jacket sleeve 24 of an elastomer extruded thereon.

Figure 2 shows a coil formed of square (or otherwise rectangular) cross-section wire 30, such that the adjacent turns 32, 34, 36, 38, 40 abut one another, not only at the outer curved surface of the spring but also substantially throughout the depth of the wire.

Figure 3 shows the part cross-section of a spring of a second embodiment having a stepped configuration (51) caused by upsetting a square wire. The spring cross-section comprises a protruding ledge 50 and complimentary step 52, whereby the step and ledge of adjacent turns interfit. Typically, in a coil of 50mm diameter the filament has a thickness of 2mm and a step depth of 0.5mm. Coils of different diameter would have filaments of proportionately greater or smaller dimensions. The overlapping step and ledge arrangement allows for a high degree of flexing of the conduit whilst at the same time maintaining an overlapped arrangement to eliminate or minimise extrusion of the jacket through the turns of the spring.

Figure 4 shows a spring formed of trapezoidal cross-sectional wire 54.

Figure 5 shows a spring formed of wire 65 having parallel internal and external surfaces 60, 62 and curved concave edge surface 64 and convex edge surface 66 such that adjacent turns interfit.

Figure 6 shows an embodiment wherein the spring is formed of wire 68 of substantially semi-circular cross-section formed, for example, by rolling round wire. The adjacent turns fit closely together at the outer curved surface of the spring, so that the flat surfaces 70 define an outer cylindrical configuration.

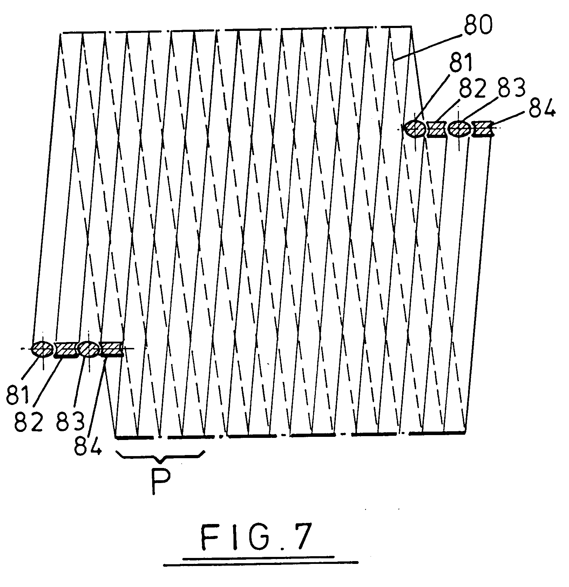

Figure 7 shows a four-start spring 80 (to be covered by a tape wrap 20 and outer jacket sleeve 24) having four intertwined helical filaments 81,82,83,84. Each filament has a pitch P whichis four times the filament thickness and helps prevent transverse slippage of adjacent coils, thereby maintaining the integrity of the spring. Alternate filaments 81,83 are of round cross-section, whilst filaments 82, 84 are of complementary bi-concave cross-section such as to provide a substantially flat outer cylindrical surface to the conduit.

Certain abutting spring cross-sections have been described by way of example only, but others falling within the terms of the present invention will be apparent to the skilled man. It is found that conduits constructed according to the present invention are capable of withstanding pressures of at least 1500psi (10.34 x 10⁶ pascals) without the damage to any transmission lines contained therein.

## Claims

1. A reinforced flexible conduit for containing a transmission line which comprises:
- a multi-start closed helical coil spring (20) of at least two helical filaments comprised of a plurality of adjacent turns (32,34,36,38,40) and defining a conduit for receiving the transmission line, adjacent turns abutting one another, and the filament having a cross-sectional configuration such that the abutting turns fit closely together at the outer curved surface of the coil spring; and
- an outer sleeve (24) disposed around the helical coil spring.

2. A reinforced conduit according to claim 1 wherein the cross-sectional configuration of the filament is substantially semi-circular (68) and has a substantially flat diameteral surface (70) arranged to face radially outwardly of the conduit so as to provide a substantially continuous outer surface of the coil, and a curved inwardly facing surface.

3. A reinforced conduit according to claim 1 or 2 wherein the abutting surfaces of the adjacent abutting turns of the coil have a cross-section (30,51,54,65,81-84) which is of complementary configuration.

4. A reinforced conduit according to claim 3 wherein the filament has a cross-sectional configuration which is selected from square (30), rectangular (30) and trapezoidal (54).

5. A reinforced conduit according to any preceding claim wherein the abutting surfaces of the adjacent abutting turns of the coil have an interfitting complementary cross-sectional configuration (51,65).

6. A reinforced conduit according to claim 5 wherein the filament has a stepped cross-section comprising a protruding ledge (50) and a step (52), the ledge of one coil turn fitting into the step of an adjacent abutting turn.

7. A reinforced conduit according to claim 5 wherein the filament has longitudinally opposed concave (64) and convex (66) surfaces, such that the convex surface of one coil turn fits into the concave surface of an adjacent abutting turn.

8. A reinforced conduit according to claim 7 which comprises four helical filaments.

9. A reinforced conduit according to claim 8 wherein the helical filaments are alternate round cross-section and bi-concave cross-section filaments.

10. A reinforced conduit according to any preceding claim which comprises a tape-wrapped layer (22) overlying the helical coil, and disposed beneath the outer sleeve (24) of the conduit.

11. A reinforced conduit according to claim 10 wherein the tape-wrapped layer comprises overlapping turns of polytetrafluoroethylene (PTFE) tape.

## Patentansprüche

1. Ein verstärkter, flexibler Kabelkanal zum Aufnehmen einer Übertragungsleitung, welcher aufweist:
- eine mehrgängige, geschlossene Spiralfeder (20) aus wenigstens zwei Spiral-Drähten, die eine Mehrzahl von benachbarten Windungen (32, 34, 36, 38, 40) aufweisen und einen Kabelkanal zum Aufnehmen der Übertragungsleitung definieren, wobei benachbarte Windungen aneinandergrenzen und der Draht eine derartige Querschnittskonfiguration aufweist, daß die aneinandergrenzenden Windungen an der gekrümmten Außenfläche der Spiralfeder satt aneinander anliegen; und
- eine äußere Hülse (24), die um die Spiralfeder herum angeordnet ist.

2. Ein verstärkter Kabelkanal gemäß Anspruch 1, bei welchem die Querschnittskonfiguration des Drahtes im wesentlichen halbkreisförmig (68) ist und eine im wesentlichen flache diametrale Oberfläche (70) aufweist. die so angeordnet ist, daß sie radial nach auswärts in Bezug auf den Kabelkanal weist, so daß eine im wesentlichen kontinuierliche Außenfläche der Spirale sowie eine gekrümmte, nach einwärts weisende Fläche vorgesehen sind.

3. Ein verstärkter Kabelkanal gemäß Anspruch 1 oder 2, bei welchem die aneinandergrenzenden Flächen der benachbarten, aneinandergrenzenden Windungen der Spirale einen Querschnitt (30, 51, 54, 65, 81 bis 84) aufweisen, der von einer komplementären Konfiguration ist.

4. Ein verstärkter Kabelkanal gemäß Anspruch 3, bei welchem der Draht eine Querschnittskonfiguration aufweist, die aus einer quadratischen (30), einer rechteckförmigen (30) und einer trapezförmigen (54) Querschnittskonfiguration ausgewählt ist.

5. Ein verstärkter Kabelkanal gemäß einem der vorhergehenden Ansprüche, bei welchem die aneinandergrenzenden Flächen der benachbarten, aneinandergrenzenden Windungen der Spirale eine miteinander zusammenpassende, komplementäre Querschnittskonfiguration (51, 65) aufweisen.

6. Ein verstärkter Kabelkanal gemäß Anspruch 5, bei welchem der Draht einen abgestuften Querschnitt aufweist, der einen vorstehenden Absatz (50) und eine Stufe (52) aufweist, wobei der Absatz einer Spiralwindung in die Stufe einer benachbarten, angrenzenden Windung hineinpaßt.

7. Ein verstärkter Kabelkanal gemäß Anspruch 5, bei welchem der Draht in Längsrichtung einander gegenüberliegende konkave (64) und konvexe (66) Flächen aufweist, derart, daß die konvexe Fläche einer Spiralwindung in die konkave Fläche einer benachbarten, angrenzenden Windung hineinpaßt.

8. Ein verstärkter Kabelkanal gemäß Anspruch 7. welcher vier Spiral-Drähte aufweist.

9. Ein verstärkter Kabelkanal gemäß Anspruch 8, bei welchem die Spiral-Drähte abwechselnd Drähte von rundem Querschnitt und Drähte von bikonkavem Querschnitt sind.

10. Ein verstärkter Kabelkanal gemäß einem der vorhergehenden Ansprüche welcher eine Schicht (22) in Form einer Bandumwicklung aufweist, welche die Spiralfeder überlagert und unterhalb der äußeren Hülse (24) des Kabelkanals angeordnet ist.

11. Ein verstärkter Kabelkanal gemäß Anspruch 10, bei welchem die Schicht in Form einer Bandumwicklung überlappende Windungen eines Bandes aus Polytetrafluorethylen (PTFE) aufweist.

## Revendications

1. Un conduit flexible armé destiné à contenir une ligne de transmission qui comprend:
- un ressort hélicoïdal fermé (20) à départs multiples composé d'au moins deux filaments hélicoïdaux constitués d'une série de spires adjacentes (32, 34, 36, 38, 40) et définissant un conduit destiné à recevoir une ligne de transmission, des spires adjacentes étant en butée l'une avec l'autre, et la configuration du filament en section transversale étant telle que les spires en butée s'ajustent étroitement entre elles à la surface extérieure incurvée du ressort hélicoïdal; et
- un manchon extérieur (24) disposé autour du ressort hélicoïdal.

2. Un conduit armé selon la revendication 1 dans lequel la configuration du filament en section transversale est sensiblement semi-circulaire (68) et comporte une surface diamétrale sensiblement plate (70), agencée de façon à faire face radialement vers l'extérieur du conduit de manière à réaliser une surface extérieure sensiblement continue de l'hélice, et une surface incurvée qui fait face vers l'intérieur.

3. Un conduit armé selon la revendication 1 ou 2 dans lequel les surfaces en butée des spires adjacentes en butée de l'hélice présentent une section transversale (30, 51, 54, 65, 81 à 84) qui est d'une configuration complémentaire.

4. Un conduit armé selon la revendication 3 dans lequel la configuration du filament en section transversale est sélectionnée parmi une configuration carrée (30), rectangulaire (30) et trapézoïdale (54).

5. Un conduit armé selon une revendication précédente quelconque dans lequel les configurations des sections transversales (51, 65) de surfaces en butée des spires adjacentes en butée de l'hélice s'ajustent entre elles de façon complémentaire.

6. Un conduit armé selon la revendication 5 dans lequel la section transversale des filaments présente des gradins qui comprennent une lisière en saillie (50) et un gradin (52), la lisière d'une spire de l'hélice s'ajustant dans le gradin d'une spire adjacente en butée.

7. Un conduit armé selon la revendication 5 dans lequel les surfaces longitudinalement opposées d'un filament sont concaves (64) et convexes (66), d'une manière telle que la surface convexe d'une spire d'hélice s'ajuste dans la surface concave d'une spire adjacente en butée.

8. Un conduit armé selon la revendication 7 qui comprend quatre filaments hélicoïdaux.

9. Un conduit armé selon la revendication 8 dans lequel les filaments hélicoïdaux sont en alternance des filaments à section transversale ronde et des filaments à section transversale biconcave.

10. Un conduit armé selon une revendication précédente quelconque qui comprend une couche (22) de bande enroulée, superposée sur l'hélice et disposée au-dessous du manchon extérieur (24) de conduit.

11. Un conduit armé selon la revendication 10 dans lequel la couche de bande enroulée comprend des spires qui se recouvrent de bande de polytétrafluoréthylène (PTFE).
